# EUROPEAN PATENT APPLICATION

(11) **EP 3 632 781 A2**
(43) Date of publication of application: **08.04.2020**
(21) Application number: 19201015.5
(22) Date of filing: 02.10.2019
(51) Int. Cl.: B62D 29/04, B62D 63/06, B62D 33/04

(54) **TRAILER OF RECREATIONAL VEHICLE**

(30) Priority: 05.10.2018 US 201862741851 P; 26.09.2019 US 201916583535
(71) Applicant: Evolutive Labs Co., Ltd., 10461 Taipei City (TW)
(72) Inventor: WANG, Ching-Fu, 10461 TAIPEI CITY (TW)
(74) Representative: Casalonga

(57) **Abstract**

The present disclosure provides a trailer of a recreational vehicle (RV). The trailer includes a plurality of modules. Each module has at least one mechanism for connecting to another module. The modules are assembled to define a body of the trailer.

## Description

### TECHNICAL FIELD

The present disclosure relates generally to a trailer of a vehicle, more particularly, to a trailer of a recreational vehicle.

### DISCUSSION OF THE BACKGROUND

Recreational Vehicle (RV) popularity is on the rise as it provides the freedom for one to explore natural without compromising comfort. RV has been around for few decades; however the manufacturing techniques and the building materials have largely remained unchanged.

### SUMMARY

Some embodiments of the present disclosure provide a trailer of a recreational vehicle (RV). The trailer includes a plurality of modules. Each module has at least one mechanism for connecting to another module. The modules are assembled to define a body of the trailer. A density of each module is between 10 gram/liter and 250 gram/liter.

Some embodiments of the present disclosure provide a trailer of an RV. The trailer includes a plurality of modules. Each module has at least one mechanism for connecting to another module. The modules are assembled to form a frameless body of the trailer.

Some embodiments of the present disclosure provide a trailer of an RV. The trailer includes a plurality of modules and at least one reinforcing element. The modules are assembled to define a body of the trailer. Each module has at least one trace inside. The at least one reinforcing element is disposed inside the at least one trace of one module and the at least one trace of another module.

Some embodiments of the present disclosure provide a trailer. The trailer includes a plurality of first modules, a plurality of second modules and a hydraulic device. Each first module has at least one first mechanism for connecting to another first module. The first modules are assembled to define an upper part of a body of the trailer. Each second module has at least one second mechanism for connecting to another second module. The second modules are assembled to define a lower part of the body of the trailer. The hydraulic device is disposed between the upper part of the body and the lower part of the body for lifting the upper part of the body against the lower part of the body.

The foregoing has outlined rather broadly the features and technical advantages of the present disclosure in order that the detailed description of the disclosure that follows may be better understood. Additional features and advantages of the disclosure will be described hereinafter, and form the subject of the claims of the disclosure. It should be appreciated by those skilled in the art that the conception and specific embodiment disclosed may be readily utilized as a basis for modifying or designing other structures or processes for carrying out the same purposes of the present disclosure. It should also be realized by those skilled in the art that such equivalent constructions do not depart from the spirit and scope of the disclosure as set forth in the appended claims.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.

A more complete understanding of the present disclosure may be derived by referring to the detailed description and claims when considered in connection with the Figures, where like reference numbers refer to similar elements throughout the Figures.
FIG. 1 is a diagram illustrating a trailer according to some embodiments of the present disclosure.
FIGS. 2 and 3 are diagrams illustrating assembly of modules according to some embodiments of the present disclosure.
FIG. 4 is a cross-sectional view of the assembly of the module shown in FIG. 3 according to some embodiments of the present disclosure.
FIGS. 5 and 6 are diagrams illustrating assembly of modules according to some embodiments of the present disclosure.
FIG. 7 is a cross-sectional view of the assembly of the module show in FIG. 6 according to some embodiments of the present disclosure.
FIGS. 8 and 9 are diagrams illustrating assembly of modules according to some embodiments of the present disclosure.
FIG. 10 is a cross-sectional view of the assembly of the module shown in FIG. 9 according to some embodiments of the present disclosure.
FIGS. 11 and 12 are diagrams illustrating assembly of modules according to some embodiments of the present disclosure.
FIGS. 13 and 14 are diagrams illustrating assembly of modules according to some embodiments of the present disclosure.
FIGS. 15A to 15C are diagrams illustrating examples of the mechanisms of the modules according to some embodiments of the present disclosure.
FIGS. 16 and 17 are diagrams illustrating the trailer according to some embodiments of the present disclosure.
FIGS. 18 and 19 are cross-sectional views of the trailer according to some embodiments of the present disclosure.
FIG. 20 is a diagram illustrating the combination of two modules according to some embodiments of the present disclosure.
FIG. 21 is a cross-sectional view of the combination of the modules shown in FIG. 20 according to some embodiments of the present disclosure.
FIG. 22 is a diagram illustrating a trailer according to some embodiments of the present disclosure.
FIGS. 23 and 24 are diagrams illustrating assembly of modules according to some embodiments of the present disclosure.
FIGS. 25 and 26 are diagrams illustrating assembly of modules according to some embodiments of the present disclosure.
FIGS. 27 to 29 are diagrams illustrating a trailer according to some embodiments of the present disclosure.
FIGS. 30 and 31 are schematic views inside the trailer according to some embodiments of the present disclosure.

### DETAILED DESCRIPTION

Embodiments, or examples, of the disclosure illustrated in the drawings are now described using specific language. It shall be understood that no limitation of the scope of the disclosure is hereby intended. Any alteration or modification of the described embodiments, and any further applications of principles described in this document, are to be considered as normally occurring to one of ordinary skill in the art to which the disclosure relates. Reference numerals may be repeated throughout the embodiments, but this does not necessarily mean that feature(s) of one embodiment apply to another embodiment, even if they share the same reference numeral.

It shall be understood that, although the terms first, second, third, etc. may be used herein to describe various elements, components, regions, layers or sections, these elements, components, regions, layers or sections are not limited by these terms. Rather, these terms are merely used to distinguish one element, component, region, layer or section from another element, component, region, layer or section. Thus, a first element, component, region, layer or section discussed below could be termed a second element, component, region, layer or section without departing from the teachings of the present inventive concept.

The terminology used herein is for the purpose of describing particular example embodiments only and is not intended to be limited to the present inventive concept. As used herein, the singular forms "a," "an" and "the" are intended to include the plural forms as well, unless the context clearly indicates otherwise. It shall be further understood that the terms "comprises" and "comprising," when used in this specification, point out the presence of stated features, integers, steps, operations, elements, or components, but do not preclude the presence or addition of one or more other features, integers, steps, operations, elements, components, or groups thereof.

Conventional recreation vehicle (RV) manufacturing adopts traditional construction and automobile processes. Major steps include, at least, building the skeleton of the vehicle by framing reinforced material, and attaching materials such as metallic sheet, wood, of plastic to wall a space or provide floor. However, the conventional manufacturing way is labor and time consuming. Moreover, the weight of the RV is heavy and fuel inefficient.

Purpose of the present disclosure is to manufacture a vehicle, not only limited to RV, with a novel way. The vehicle is constructed by assembling pre-fabricated light-weight modules with comparable or greater mechanical performances such as stiffness, etc., but with lower effective density than the conventional ones. A pre-fabricated module may include reinforced structure surrounded by a light weight matrix material and a joint mechanism to engage with another pre-fabricated module. The process of construction can be performed efficiently by assembling well designed various pre-fabricated modules.

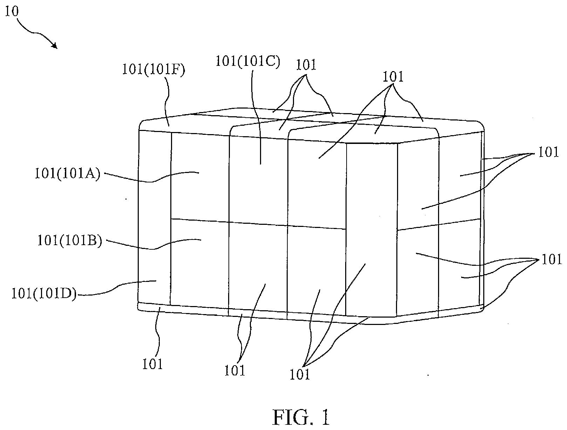

FIG. 1 is a diagram illustrating a trailer 10 according to some embodiments of the present disclosure. The trailer 10 may be attached to a towing vehicle (not shown) as a recreational vehicle (RV). The trailer 10 includes a plurality of modules 101. In particular, the modules 101 are assembled to define a body of the trailer 10.

In some embodiments, a density of each module 101 may be between 10 gram/liter and 250 gram/liter. Hence, the body of the trailer 10 assembled by the modules 101 can be significantly lighter than a body of a conventional trailer assembled by metal. Accordingly, the required power for the towing vehicle can be reduced dramatically.

For example, when a conventional metal trailer and a trailer (using the module with the density 200 gram/liter) of the present disclosure have the same dimension, the conventional metal trailer may be 2 to 3 times the weight of the trailer of the present disclosure.

Similar, when a conventional metal trailer and a trailer (using the module with the density 20 gram/liter) of the present disclosure have the same dimension, the conventional metal trailer may be 20 to 30 times the weight of the trailer of the present disclosure. Therefore, even a fuel economy automobile is able to haul the trailer of the present disclosure.

On the other hand, for providing enough rigidity, the stiffness of the modules 101 should be stiffness of the modules 101 should be matched, surpass or at least close to the stiffness of the metal.

Accordingly, a material of the modules 101 may include Expanded Polypropylene (EPP) or expanded Polyethylene terephthalate (ePET). The density of the module 101 made of EPP or ePET can be between 20 gram/liter and 180 gram/liter. The stiffness of the module 101 made of EPP or ePET depends on the density of the module 101, and may be between 20MPa to 80MPa.

In addition, when EPP or ePET is selected as the material of the modules 101, the body of the trailer 10 assembled by the modules 101 can be significantly lighter than a body of a conventional trailer assembled by wood. Accordingly, the required power for the towing vehicle can be reduced as well.

Further, when EPP or ePET is selected as the material of the modules 101, the manufacturing efficiency can be improved because each module 101 can be efficiently made by molding out of EPP or ePET. In some embodiments, the material of the modules 101 may include other materials which have physical properties similar to EPP or ePET.

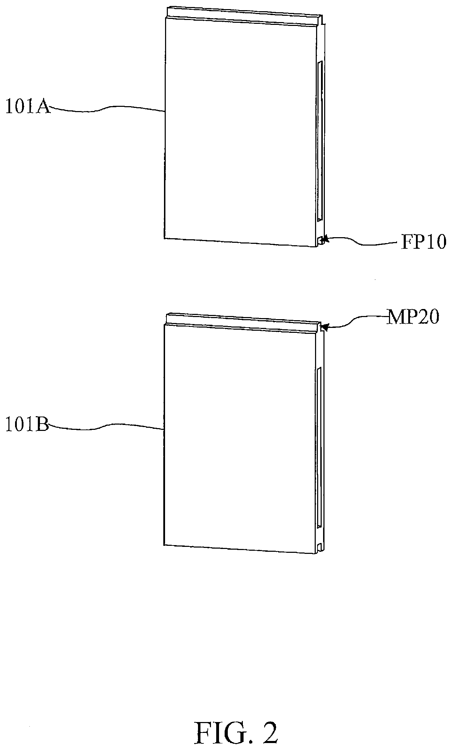

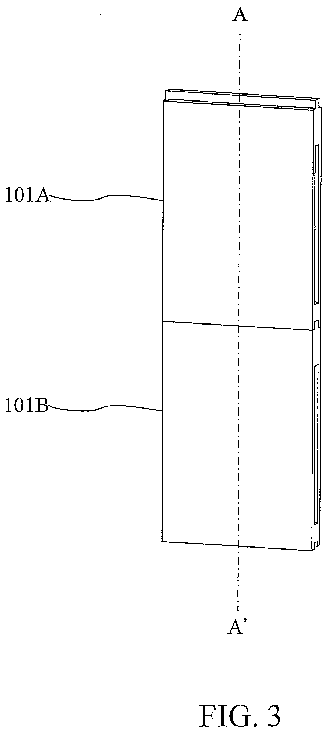

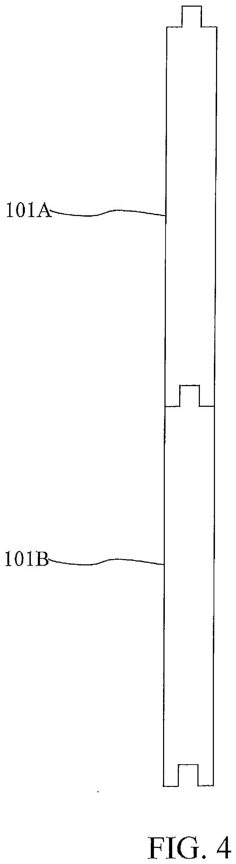

FIGS. 2 and 3 are diagrams illustrating assembly of modules 101 according to some embodiments of the present disclosure. FIG. 4 is a cross-sectional view of the assembly of the module 101 shown in FIG. 3 according to some embodiments of the present disclosure.

Module 101A and 101B can be shaped and sized per required design. In the present embodiment, plate is used as an example for illustration. The modules 101A and 101B are assembled by some mechanisms to form a part of the trailer 10.

More specifically, as shown in FIG. 2, the module 101A has a mechanism FP10. The mechanism FP10 may be formed on one side of the module 101A. The module 101B has a mechanism MP20. The mechanism MP20 may be formed on one side of the module 101B.

The mechanism MP20 engages with the mechanism FP10 for connecting the module 101B to the module 101A as shown in FIGS. 3 and 4. Therefore, the combination of the modules 101A and 101B may be formed as a part of a side wall of the trailer 10.

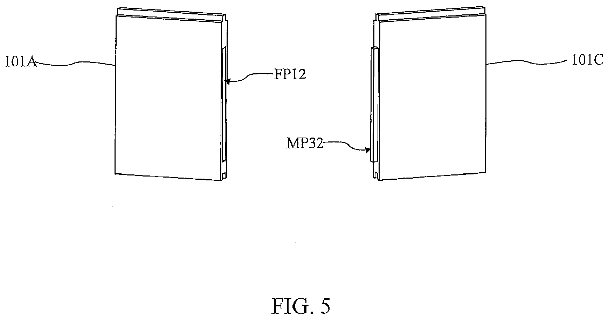

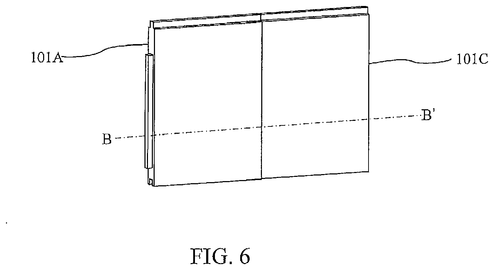

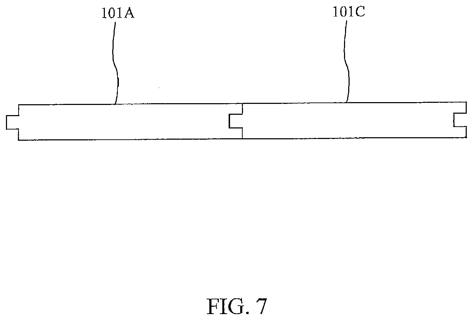

FIGS. 5 and 6 are diagrams illustrating assembly of modules 101 according to some embodiments of the present disclosure. FIG. 7 is a cross-sectional view of the assembly of the module 101 show in FIG. 6 according to some embodiments of the present disclosure.

The module 101C can be shaped and sized per required design. In the present embodiment, plate is used as an example for illustration. The modules 101A and 101C are assembled by some mechanisms to form a part of the trailer 10.

More specifically, as shown in FIG. 5, the module 101A has another mechanism FP12. The mechanism FP12 may be formed on one side of the module 101A. In some embodiments, the side with the mechanism FP12 may be adjacent to the side with the mechanism FP10.

The module 101C has a mechanism MP32. The mechanism MP32 may be formed on one side of the module 101C. The mechanism MP32 engages with the mechanism FP12 for connecting the module 101C to the module 101A as shown in FIGS. 6 and 7. Therefore, the combination of the modules 101A and 101C may be formed as a part of the side wall of the trailer 10.

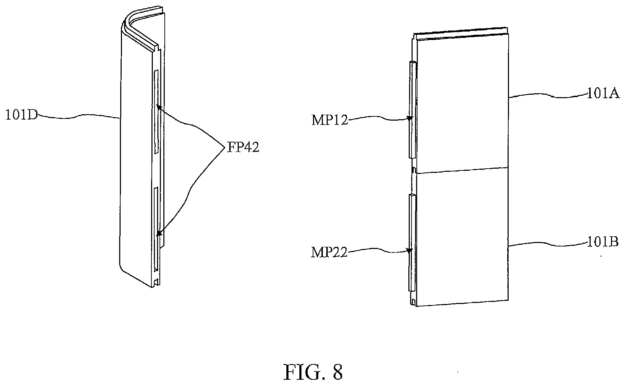

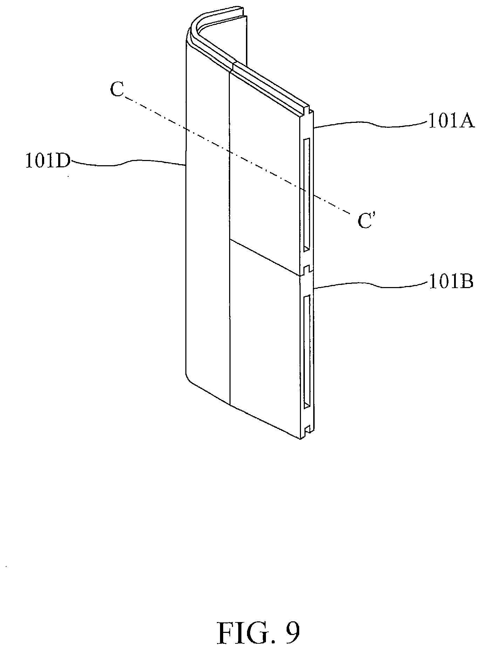

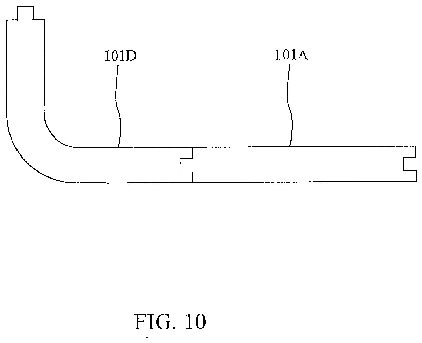

FIGS. 8 and 9 are diagrams illustrating assembly of modules 101 according to some embodiments of the present disclosure. FIG. 10 is a cross-sectional view of the assembly of the module 101 shown in FIG. 9 according to some embodiments of the present disclosure.

The module 101D can be shaped and sized per required design. In the present embodiment, curved plate is used as an example for illustration. The module 101D may be disposed as a corner wall of the trailer 10. The module 101A has another mechanism MP12. The mechanism MP12 may be formed on one side of the module 101A. In some embodiments, the side with the mechanism MP12 may be opposite to the side with the mechanism FP12.

The module 101B has another mechanism MP22. The mechanism MP22 may be formed on one side of the module 101B. In some embodiments, the side with the mechanism MP12 and the side with the mechanism 22 may face the same direction. The module 101D has two mechanisms FP42. The mechanisms FP42 respectively correspond to the mechanisms MP12 and MP22.

After the module 101A connects to the module 101B, the mechanisms MP12 and MP22 engages with the mechanisms FP42 for connecting the assembly of the modules 101A and 101B to the module 101D as shown in FIGS. 9 and 10. Therefore, the combination of the modules 101A, 101B and 101D may be formed as a combination of the corner wall and a part of the side wall of the trailer 10.

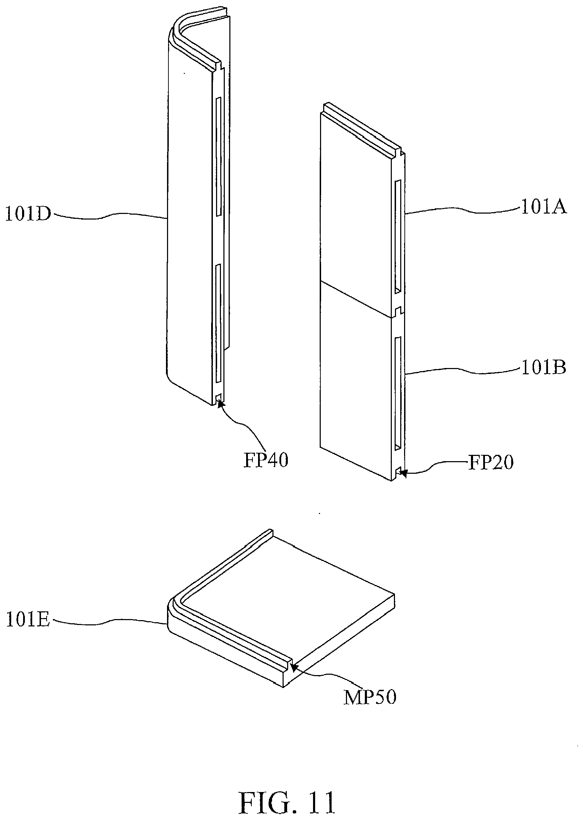

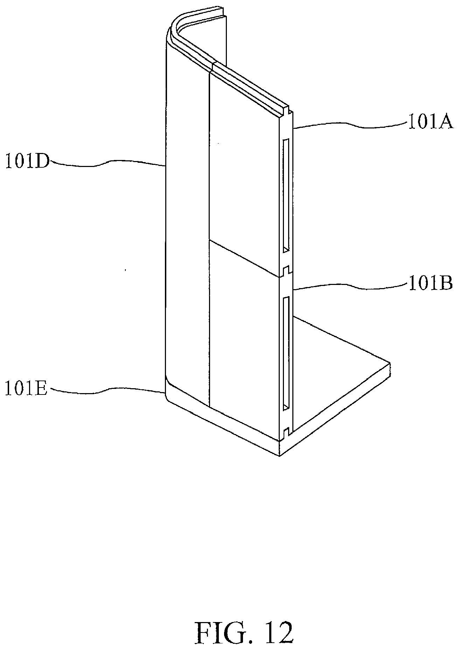

FIGS. 11 and 12 are diagrams illustrating assembly of modules 101 according to some embodiments of the present disclosure. The module 101E can be shaped and sized per required design. In the present embodiment, plate which has a curved corner corresponding to the curved shape of the module 101D is used as an example for illustration. The module 101E may be disposed as a part of a floor of the trailer 10.

The module 101B has another mechanism FP20. The module 101D has another mechanism FP40. In some embodiments, the side with the mechanism FP20 and the side with the mechanism FP40 may face the same direction. The module 101E has a mechanism MP50. The mechanism FP50 corresponds to the mechanisms FP20 and FP40.

After the assembly of the modules 101A and 101B connects to the module 101D, the mechanisms FP20 and FP40 engages with the mechanism MP50 for connecting the assembly of the modules 101A, 101B and 101D to the module 101E as shown in FIGS. 12.

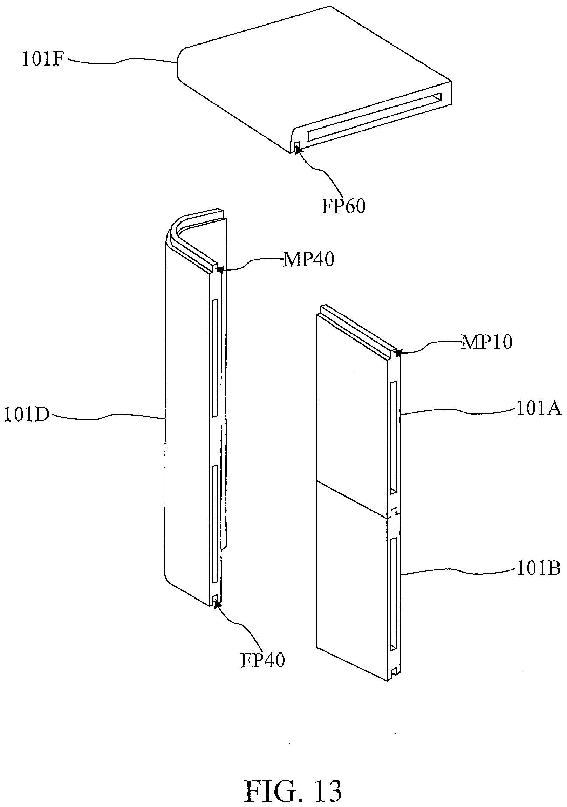

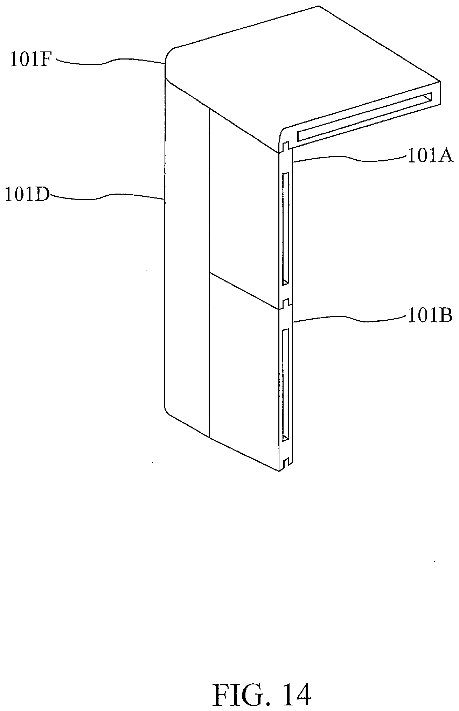

FIGS. 13 and 14 are diagrams illustrating assembly of modules 101 according to some embodiments of the present disclosure. The module 101F can be shaped and sized per required design. In the present embodiment, plate which has a curved corner corresponding to the curved shape of the module 101D is used as an example for illustration. The module 101F may be disposed as a part of a ceiling of the trailer 10.

The module 101A has another mechanism MP10. The module 101D has another mechanism MP40. In some embodiments, the side with the mechanism MP10 and the side with the mechanism MP40 may face the same direction. The module 101F has a mechanism FP60. The mechanism FP60 corresponds to the mechanisms MP10 and MP40.

After the assembly of the modules 101A and 101B connects to the module 101D, the mechanisms MP10 and MP40 engages with the mechanism FP60 for connecting the assembly of the modules 101A, 101B and 101D to the module 101F.

It should be noted that the order of assembling the modules can be adjusted. For example, the module 101A connects to the module 101D. The module 101B connects to the assembly of the modules 101A and 101D. Next, the module 101F connects to the assembly of the modules 101A, 101B and 101D. Then, the module 101E connects to the assembly of the modules 101A, 101B, 101D and 101F. However, it is not intended to limit the order of assembling the modules.

In some embodiments, the mechanisms MP10, MP12, MP20, MP22, MP32, MP 40 and MP50 may include male portions. The corresponding mechanisms FP10, FP12, FP20, FP40, FP42 and FP60 may include female portions.

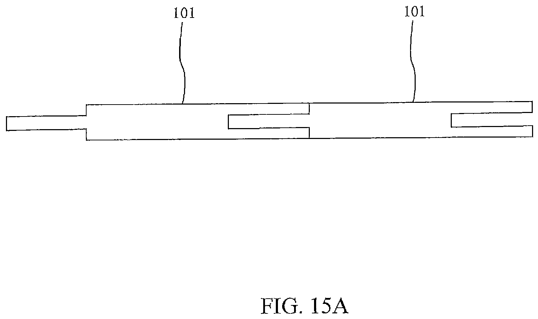

In some embodiments, for improving the tightness of combining the mechanisms of the modules, the sizes of the male portions and the female portions may be varied. For example, as shown in FIG. 15A, a length of a male portion is about one third of a length of the module 101. A depth of a corresponding female portion is about one third of the length of the module 101. The modules 101 and the mechanisms (i.e., the male portions and the female portions) may be integrally molded.

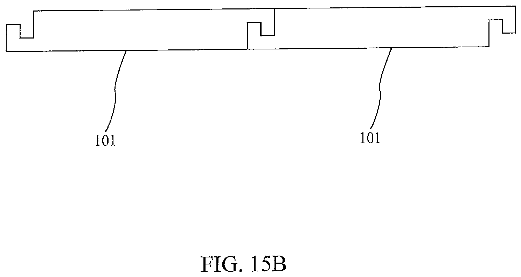

In some embodiments, the mechanisms of the modules 101 may include hook structures as shown in FIG. 15B. The modules 101 and the mechanisms (i.e., the hook structures) may be integrally molded as well.

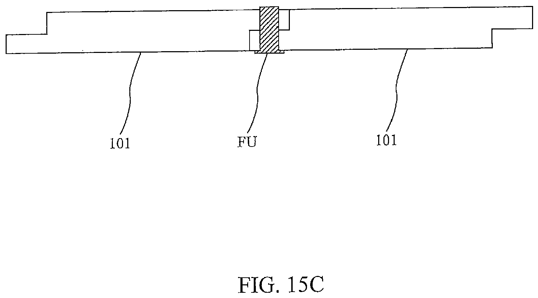

In some embodiments, the mechanisms of the modules 101 may include some fixing units. In particular, as shown in FIG. 15C, when the modules 101 are assembled, a fixing unit FU can be used for fixing the modules 101.

More specifically, each module 101 has a protrusion for attaching to another protrusion of another module 101. After the protrusions of the modules 101 are attached, the fixing unit FU can be used to penetrate the protrusions of the modules 101 for fixing the modules 101.

In some embodiments, the fixing unit FU may include nail, screw nail, bolt, rivet, pin or stud. However, it is not intended to limit the fixing unit and the corresponding assembling implementation of the present disclosure.

It should be noted that, according to the above disclosures, the people skilled in the art should easily understand that the rest modules 101 may have corresponding mechanisms to be assembled to form the whole body of the trailer 10 as shown in FIG. 1. However, it is not intended to limit the assembling implementation of the present disclosure.

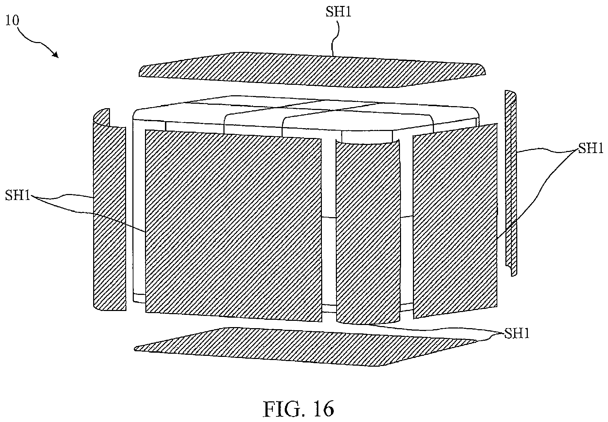

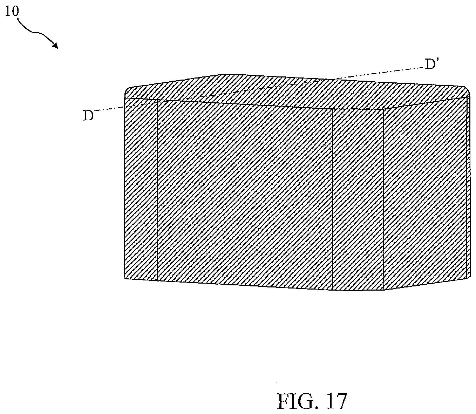

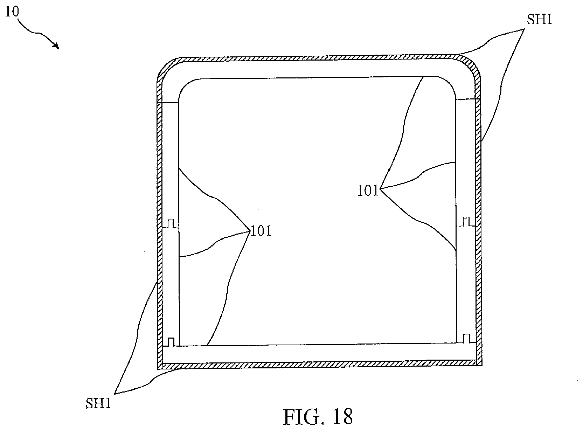

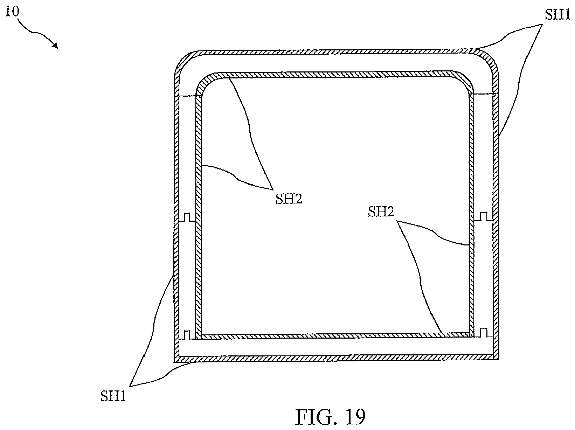

FIGS. 16 and 17 are diagrams illustrating the trailer 10 according to some embodiments of the present disclosure. FIGS. 18 and 19 are cross-sectional views of the trailer 10 according to some embodiments of the present disclosure.

In some embodiments, as shown in FIGS. 16 to 18, the outside of the trailer 10 is covered by an outer cover. The outer cover includes a plurality of shells SH1. In some embodiments, as shown in FIG. 19, the inner of the trailer 10 is covered by an inner cover. The inner cover includes a plurality of shells SH2. Accordingly, the modules 101 may be located between the shells SH1 and the shells SH2. In some embodiments, the shells SH1 and SH2 may include a material of metal or wood.

In some embodiments, a thermal conductivity of the modules 101 depends on the density of the modules 101, and may be between 0.01 W/(m*K) and 0.2 W/(m*K). Therefore, the body of the trailer 10 assembled by the modules 101 may have high temperature insulating capability.

In some embodiments, comparing to a conventional RV trailer, the body of the trailer 10 may be frameless. In particular, as for a conventional RV trailer, a skeleton (i.e., a frame) must be built first for a body of the trailer. The rest components are then attached to the frame to form the conventional RV trailer. On the contrary, by assembling the modules 101 to define the body of the trailer 10 according to the present disclosure, the body of the trailer 10 may be frameless. In other words, the body of the trailer 10 may be formed without frame.

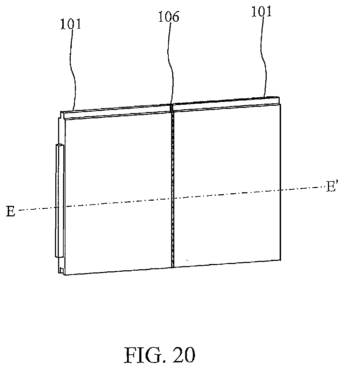

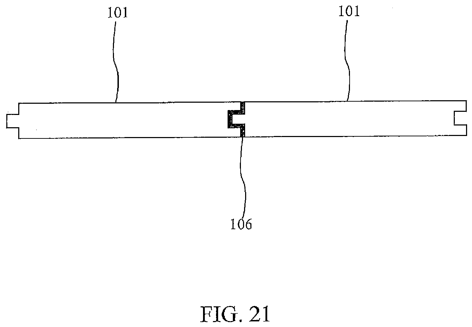

In some embodiments, for enhancing the robustness of the combination of the modules 101, a binding mechanism may be introduced. FIG. 20 is a diagram illustrating the combination of two modules 101 according to some embodiments of the present disclosure. FIG. 21 is a cross-sectional view of the combination of the modules 101 shown in FIG. 20 according to some embodiments of the present disclosure.

In particular, at least one binding element 106 is utilized for binding the modules 101. The at least one binding element may include an adhesive. In some embodiments, when the material of the modules 101 includes EPP or ePET, the at least one binding element 106 can be formed by heating the modules 101 to cement a seam between the modules 101 after the modules 101 are assembled.

In some embodiments, for fire resistant, the module 101 may include a fire retardant (not shown). In particular, the fire retardant can be disposed inside the module 101. In some embodiments, a material of one of the module 101 may include the fire retardant as an additive.

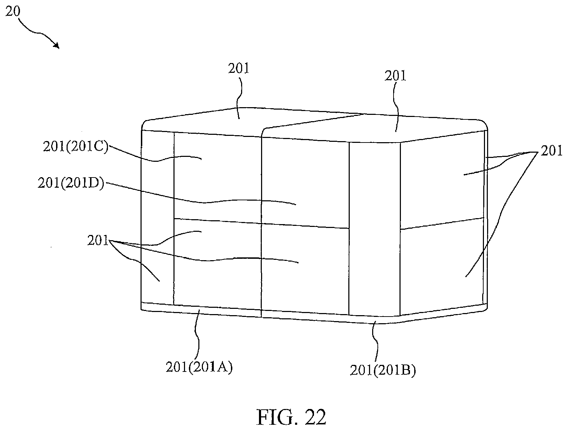

In some embodiments, for enhancing the rigidity of the body of the trailer, reinforcing element may be introduced. FIG. 22 is a diagram illustrating a trailer 20 according to some embodiments of the present disclosure. The trailer 20 may be attached to a towing vehicle (not shown in FIG. 22) as an RV. The trailer 20 includes a plurality of modules 201. In particular, the modules 201 are assembled to define a body of the trailer 20.

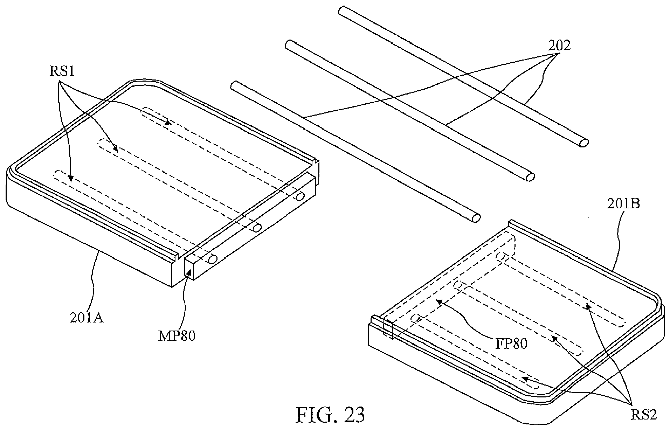

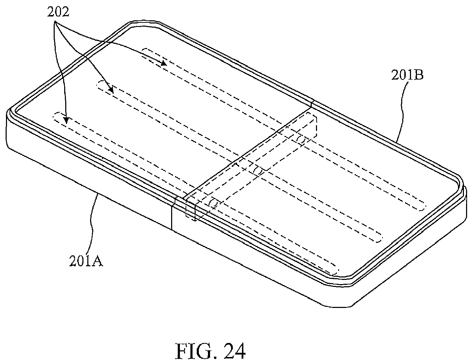

FIGS. 23 and 24 are diagrams illustrating assembly of modules 201 according to some embodiments of the present disclosure. The module 201A has a mechanism MP80 and the module 201B has a mechanism FP80. The mechanism MP80 engages with the mechanism FP80 for connecting the module 201A to the module 201B. Therefore, the combination of the modules 201A and 201B may be formed as a floor of the trailer 20.

In some embodiments, the trailer 20 includes connecting elements 202 for reinforcing the rigidity of the combination of the modules 201 of the trailer 20. Each module 201 has at least one trace for guiding the connecting elements 202.

In particular, the mechanism MP80 of the module 201A includes receiving spaces RS1. Each receiving space RS1 receives part of one connecting element 202. The mechanism FP80 of the module 201B includes receiving spaces RS2. Each receiving space RS2 receives part of one connecting element 202.

More specifically, the connecting elements 202 are inserted into the receiving spaces RS1. Next, when the mechanism MP80 engages with the mechanism FP80 for connecting the modules 201A to the module 201B, the connecting elements 202 are inserted into the receiving spaces RS2.

After assembling the modules 201A and 201B, the connecting elements 202 are disposed inside the assembly of the modules 201A and 201B. The rigidity of the combination of the modules 201A and 201B can be reinforced by the connecting elements 202.

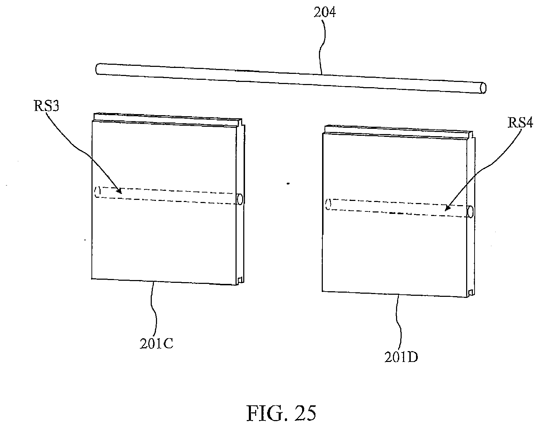

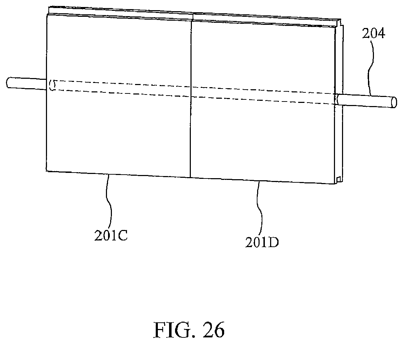

FIGS. 25 and 26 are diagrams illustrating assembly of modules 201 according to some embodiments of the present disclosure. The module 201C has a receiving space RS3. The module 201D has a receiving space RS4. The receiving spaces RS3 and RS4 are through holes respectively formed in the modules 201C and 201D. A connecting element 204 penetrates the modules 201C and 201D through the through holes. In some embodiments, the modules 201C and 201D may be assembled by the connecting element 204 without other mechanism.

In some embodiments, when the modules 201 are made by molding (e.g., injection moulding), the connecting elements 204 can be disposed in the modules 201 during the process of molding. In particular, when the modules 201 are molded by molds, the corresponding connecting elements 204 can be located inside the molds. Accordingly, the modules 204 can be formed with the corresponding connecting elements 204 inside.

In some embodiments, a material of the connecting elements 202 may include metal, polymer, or composite. The composite may include carbon or glass fiber. In some embodiments, a shape of the connecting element 202 may include bar, tube, sheet, rod or beam.

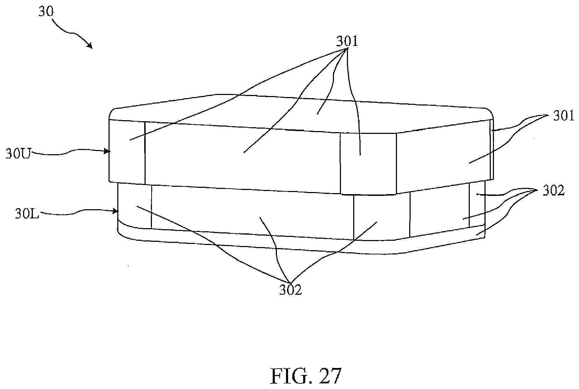

In some embodiments, for adjusting the size of the body of the trailer, adjusting mechanism may be introduced. FIGS. 27 to 29 are diagrams illustrating a trailer 30 according to some embodiments of the present disclosure. The trailer 30 includes a plurality of modules 301 and a plurality of modules 302.

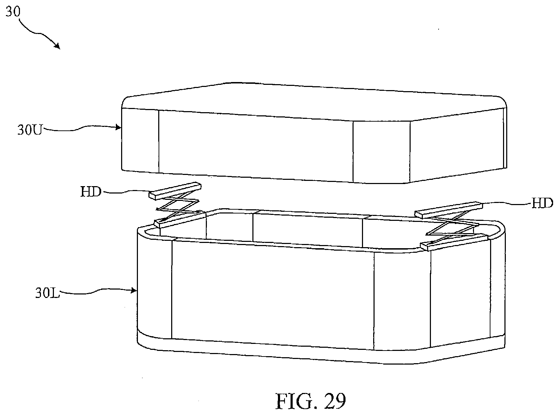

In particular, the modules 301 are assembled to define an upper part 30U of a body of the trailer 30. The modules 302 are assembled to define a lower part 30L of the body of the trailer 30. Hydraulic devices HD can be disposed between the upper part 30U of the body and the lower part 30L of the body. As shown in FIG. 29, one end of each hydraulic device HD is disposed on an edge of the lower part 30L. Another end of each hydraulic device HD is against the upper part 30U when the upper part 30U is assembled with the lower part 30L.

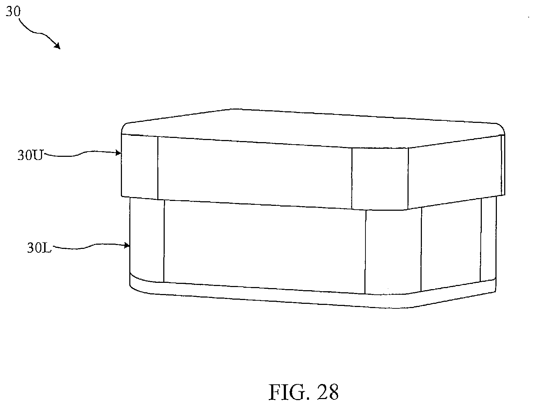

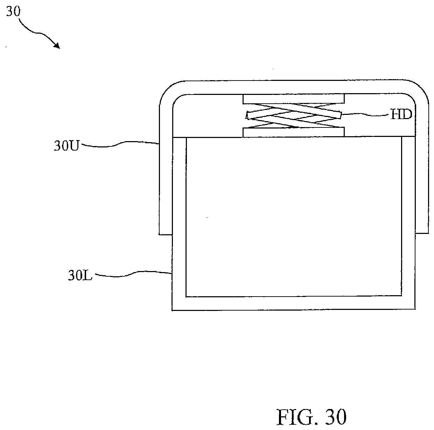

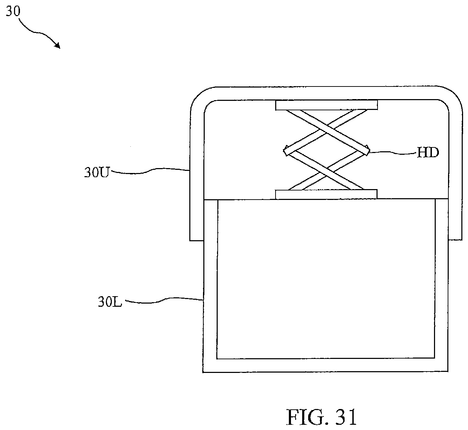

Referring to FIGS. 30 and 31 together. FIGS. 30 and 31 are schematic views inside the trailer 30 according to some embodiments of the present disclosure. FIGS. 27 and 30 show a release status of the hydraulic devices HD. FIGS. 28 and 31 show an enforcement status of the hydraulic devices HD.

More specifically, when the hydraulic devices HD are under the release status, the upper part 30U is lowered. When the hydraulic devices HD are under the enforcement status, the upper part 30U is lifted.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions and alterations herein without departing from the spirit and scope of the present disclosure.

## Claims

1. A trailer of a recreational vehicle (RV), comprising:
a plurality of modules, wherein each module has at least one mechanism for connecting to another module, and the modules are assembled to define a body of the trailer;
wherein a density of each module is between 10 gram/liter and 250 gram/liter.

2. The trailer of Claim 1, wherein a material of the modules includes Expanded Polypropylene (EPP) or expanded Polyethylene terephthalate (ePET), and the density of each module is between 20 gram/liter and 180 gram/liter.

3. The trailer of Claim 2, wherein each module is made by molding out of EPP or ePET.

4. The trailer of Claim 1, wherein the modules includes:
a first module, wherein the at least one mechanism of the first module includes a male portion for inserting into a female portion of another module.

5. The trailer of Claim 1, wherein the modules includes:
a first module, wherein the at least one mechanism of the first module includes a female portion for receiving a male portion of another module.

6. The trailer of Claim 1, further comprising:
a connecting element;
wherein the modules further comprise:
a first module, wherein the at least one mechanism of the first module includes a first receiving space for receiving part of the connecting element; and
a second module, wherein the at least one mechanism of the second module includes a second receiving space for receiving another part of the connecting element.

7. The trailer of Claim 6, wherein the first receiving space is a through hole formed in the first module, and the connecting element penetrates the first module through the through hole.

8. The trailer of Claim 6, wherein a shape of the connecting element includes bar, tube, sheet, rod, or beam.

9. The trailer of Claim 1, further comprising:
at least one binding element, for binding a first module and a second module of the modules.

10. The trailer of Claim 9, wherein the at least one binding element is formed by heating the first module and the second module to cement a seam therebetween after the first module and the second module are assembled.

11. The trailer of Claim 9, wherein the at least one binding element includes an adhesive.

12. The trailer of Claim 1, wherein one of the modules includes a fire retardant or a material of one of the modules includes a fire retardant as an additive.

13. The trailer of Claim 1, further comprising:
a first shell, for covering the body of the trailer; and
a second shell, for covering the body of the trailer;
wherein the modules are located between the first shell and the second shell.

14. A trailer of a recreational vehicle (RV), comprising:
a plurality of modules, wherein each module has at least one mechanism for connecting to another module;
wherein the modules are assembled to form a frameless body of the trailer.

15. A trailer, comprising:
a plurality of first modules, wherein each first module has at least one first mechanism for connecting to another first module, and the first modules are assembled to define a upper part of a body of the trailer;
a plurality of second modules, wherein each second module has at least one second mechanism for connecting to another second module, and the second modules are assembled to define a lower part of the body of the trailer; and
a hydraulic device, disposed between the upper part of the body and the lower part of the body for lifting the upper part of the body against the lower part of the body.
